# EUROPÄISCHE PATENTANMELDUNG

(11) **EP 1 688 287 A2**
(43) Veröffentlichungstag der Anmeldung: **09.08.2006**
(21) Anmeldenummer: 06001955.1
(22) Anmeldetag: 31.01.2006
(51) Int. Cl.: B60J 5/04

(54) **Fahrzeugseitentür mit einer Türverstärkung**

(30) Priorität: 08.02.2005 DE 102005005684
(71) Anmelder: Bayerische Motoren Werke Aktiengesellschaft, 80809 München (DE)
(72) Erfinder: Leingärtner, Richard, 93194 Walderbach (DE)

(57) **Zusammenfassung**

Zur Verbesserung der Steifigkeit und des Seitenaufprallschutzes einer Fahrzeugseitentür kann eine Türverstärkung in einer Fahrzeugseitentür verbaut werden, die aus einem hochfesten Stahlblech tiefgezogen sein kann. Allerdings kann die Türverstärkung in Abhängigkeit von Ziehtiefe und Stahlgüte nur relativ große Radien aufweisen, und Profilschrägen müssen relativ flach ausgeführt werden. Dadurch kann die Steifigkeit der Türverstärkung durch ihre Bauteilgeometrie nur in geringem Maße erhöht werden. Dies gilt um so mehr, je höherfester die gewählte Stahlgüte ist. Aufgabe der Erfindung ist es, eine Fahrzeugseitentür mit einer Türverstärkung zu schaffen, die gute Crasheigenschaften und gute Steifigkeitseigenschaften der Fahrzeugseitentür gewährleistet.

Erfindungsgemäß ist die Türverstärkung (1) der Fahrzeugseitentür aus einem hochfesten Warmumformstahlblech tiefgezogen. Beim Warmumformen kommt es zu keiner oder nur wesentlich geringeren Verfestigungen im Stahlblech, da dieses bei Temperaturen oberhalb der Rekristallisationstemperatur des Stahlblechs umgeformt wird, die deutlich oberhalb der normalen Raumtemperatur liegt. Durch die Verwendung von Warmumformstählen können die oben beschriebenen Nachteile weitgehend umgangen werden.

## Beschreibung

Die Erfindung betrifft eine Fahrzeugseitentür mit einer Türverstärkung nach dem Oberbegriff des Patentanspruchs 1.

In der nicht vorveröffentlichten DE 103 50 712.4 ist eine Fahrzeugseitentür mit einer Türverstärkung zur Verbesserung der Steifigkeit und des Seitenaufprallschutzes der Fahrzeugseitentür beschrieben, die aus einem hochfesten Stahlblech tiefgezogen sein kann. Allerdings kann die Türverstärkung in Abhängigkeit von Ziehtiefe und Stahlgüte nur relativ große Radien aufweisen, und Profilschrägen müssen relativ flach ausgeführt werden. Dadurch kann die Steifigkeit der Türverstärkung durch ihre Bauteilgeometrie nur in geringem Maße erhöht werden. Dies gilt um so mehr, je höherfester die gewählte Stahlgüte ist. Hier gibt es einen Zielkonflikt zwischen Crasheigenschaften und Steifigkeitseigenschaften der Fahrzeugseitentür. Zudem werden mit zunehmender Stahlgüte die Bauteiltoleranzen durch Rückfederungseffekte größer.

Aufgabe der Erfindung ist es, eine Fahrzeugseitentür mit einer Türverstärkung zu schaffen, die gute Crasheigenschaften und gute Steifigkeitseigenschaften der Fahrzeugseitentür gewährleistet.

Diese Aufgabe wird mit einer Fahrzeugseitentür mit einer Türverstärkung mit den Merkmalen des Patentanspruchs 1 gelöst.

Erfindungsgemäß ist die Türverstärkung der Fahrzeugseitentür aus einem hochfesten Warmumformstahlblech tiefgezogen. Beim Warmumformen kommt es zu keiner oder nur wesentlich geringeren Verfestigungen im Stahlblech, da dieses bei Temperaturen oberhalb der Rekristallisationstemperatur des Stahlblechs umgeformt wird, die deutlich oberhalb der normalen Raumtemperatur liegt. Durch die Verwendung von Warmumformstählen können die oben beschriebenen Nachteile weitgehend umgangen werden. Gegenüber hochfesten Kaltumformstählen sind geringere Ziehradien, steilere Profilflanken und größere Ziehtiefen möglich. Dabei können Stahlgüten mit höchsten Zugfestigkeiten von mindestens 1500 MPa zum Einsatz kommen, die beste Crasheigenschaften gewährleisten. Als Warmumformstähle eignen sich unter anderem Borstähle, wie zum Beispiel 22MnB5 nach EN 10083-3. Durch die erzielbare hohe geometrische Steifigkeit können die Materialdicke und damit das Gewicht der Türverstärkung reduziert werden.

In der Gestaltung der Türverstärkung bestehen aufgrund der guten Umformbarkeit mehr Freiheiten. Dadurch kann die Türverstärkung annähernd optimal zum Schutz bei einem Seitenaufprall gestaltet werden. Typischerweise erstreckt sich die Türverstärkung dazu im wesentlichen über die gesamte Länge der Fahrzeugseitentür, die sich in der geschlossenen Stellung mit ihrem vorderen und hinteren Randbereich an einer angrenzenden Fahrzeugkarosserie abstützt. Bevorzugt weist die Türverstärkung zudem einen einteilig ausgeführten Abschnitt auf, der sich bis in den unteren Bereich der Fahrzeugseitentür erstreckt, über den sich die geschlossene Fahrzeugseitentür an einem Seitenschweller der Fahrzeugkarosserie abstützt. So kann bei einem Seitenaufprall die Last teilweise in den Seitenschweller eingeleitet werden.

Darüber hinaus kann die Türverstärkung so gestaltet sein, dass sie noch weitere Funktionen erfüllt. So kann die Türverstärkung einteilig ausgeführte Abschnitte aufweisen, die bestimmte Bereiche der Fahrzeugseitentür versteifen. Dies ist insbesondere in den Bereichen der Fahrzeugseitentür erforderlich, in denen Lasten in die Fahrzeugseitentür eingeleitet werden. Dazu zählen unter anderem die Anbindungsbereiche von Scharnieren, der Anbindungsbereich eines Türfeststellers oder eines Außenspiegels. Weitere Hinweise zur möglichen Gestaltung der Türverstärkung können der DE 103 50 712.4 entnommen werden, deren gesamter Offenbarungsgehalt hiermit ausdrücklich mit aufgenommen ist.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: eine Ansicht der vorderen Schmalseite einer Türverstärkung einer Fahrzeugseitentür eines Personenkraftwagens und
- Fig. 2: eine Seitenansicht der Türverstärkung aus Fig. 1.

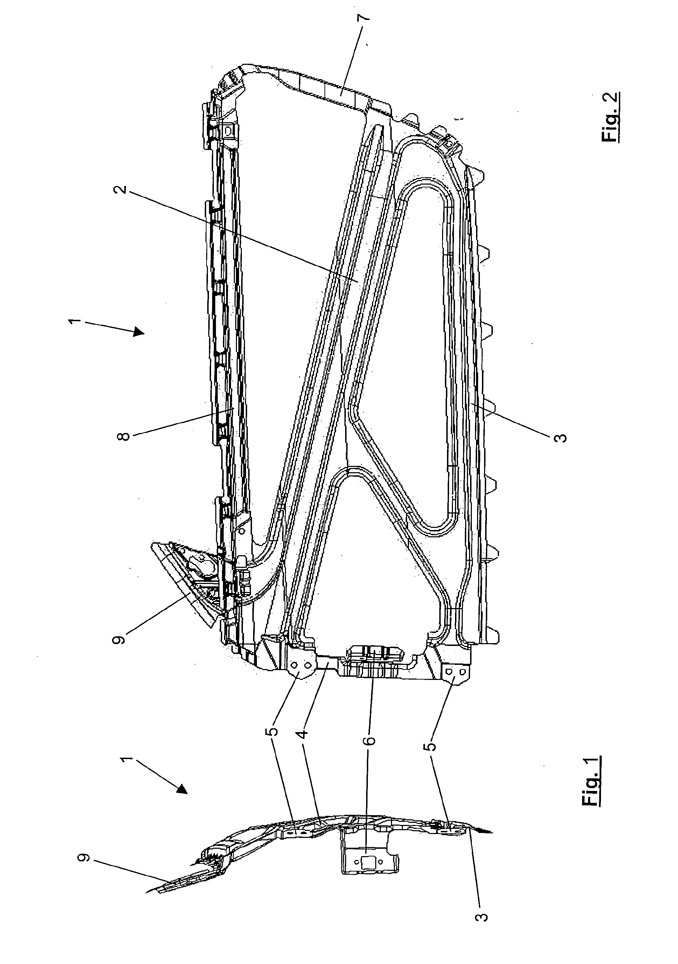

In den beiden Figuren Fig. 1 und Fig. 2 ist eine Türverstärkung 1 einer vorderen Fahrzeugseitentür in Schalenbauweise eines Personenkraftwagens dargestellt. Die Fahrzeugseitentür weist eine Innen- und Außenblechschale auf, zwischen denen die dargestellte Türverstärkung 1 angeordnet ist.

Die Türverstärkung 1 erstreckt sich über die gesamte Länge der Fahrzeugseitentür. Zur Verbesserung des Seitenaufprallschutzes weist die Türverstärkung 1 einen diagonal von vorne oben nach hinten unten verlaufenden Crashholm 2 auf, der bei einem Seitenaufprall zunächst einen Großteil der Kräfte aufnimmt. Dieser deformiert sich dabei und absorbiert so einen Teil der Kräfte, den verbleibenden Teil leitet der Crashholm 2 in die bei geschlossener Fahrzeugseitentür angrenzende Fahrzeugkarosserie ein. Dazu erstreckt sich der Crashholm 2 - in Fahrtrichtung gesehen - nach vorne bis in den Bereich einer A-Säule der Fahrzeugkarosserie und nach hinten bis in den Bereich einer B-Säule der Fahrzeugkarosserie. Zudem ist der Crashholm 2 am vorderen Ende, am hinteren Ende und im mittleren Bereich mit einem unteren Längsholm 3 der Türverstärkung 1 verbunden. Dieser befindet sich bei geschlossener Fahrzeugseitentür im Bereich eines Seitenschwellers der Fahrzeugkarosserie. Dadurch kann die Türverstärkung 1 bei einem Seitenaufprall auch über den unteren Längsholm 3 Kräfte in die Fahrzeugkarosserie im Bereich des Seitenschwellers einleiten.

Darüber hinaus weist die Türverstärkung 1 mehrere Abschnitte auf, die die Fahrzeugseitentür in den Bereichen versteifen, in denen Kräfte in die Fahrzeugseitentür eingeleitet werden. So weist die Türverstärkung 1 einen vorderen Abschnitt 4 auf, der die Anbindungsbereiche 5 von Türscharnieren und den Anbindungsbereich 6 einer Türbremse versteift. Ein hinterer Abschnitt 7 der Türverstärkung 1 versteift den Bereich eines Türschlosses und ein oberer Längsholm 8 versteift die Türbrüstung der Fahrzeugseitentür. Zudem weist die Türverstärkung 1 einen dreieckigen Abschnitt 9 zur Versteifung des Anbindungsbereichs eines Außenspiegels auf. Das einteilige Anformen all dieser Versteifungsabschnitte 4, 7, 9 und -holme 8 spart gegenüber lauter einzelnen Versteifungsbauteilen viel Material und damit Gewicht sowie Montageaufwand.

Die Türverstärkung 1 ist in einem Warmumformverfahren aus einem hochfesten Borstahlblech mit einer Zugfestigkeit von 1500 MPa einteilig tiefgezogen worden. Gegenüber einem Kaltumformverfahren hat das Warmumformverfahren den großen Vorteil, dass es kaum zu Verfestigungen kommt, da die Umformtemperatur oberhalb der Rekristallisationstemperatur des Materials liegt. So lassen sich Umformgrade realisieren, die bei einem Kaltumformverfahren bereits viel früher zu einer Erschöpfung der Streckgrenze geführt hätten. Dadurch können Stahlgüten, wie hier Borstähle, mit einer Zugfestigkeit verwendet werden, die bei einer Kaltumformung nicht den für die Türverstärkung 1 erforderlichen Umformgrad aufweisen würden. So kann mit einem dünneren Blech die gleiche Steifigkeit erreicht werden, wie bei einem dickeren Blech, das kaltumgeformt wird. Dünnere Bleche haben den Vorteil, dass sie ein geringeres Gewicht aufweisen. Auch sind bei einem Warmumformverfahren die Rückfedereffekte wesentlich geringer als bei einem Kaltumformverfahren, sodass die Türverstärkung 1 geringere Toleranzen aufweist, als eine vergleichbare Türverstärkung, die in einem Kaltumformverfahren hergestellt wurde.

Die erfindungsgemäße Türverstärkung 1 kann also aufgrund des Warmumformverfahrens aus hochfesten Stahlblechsorten bestehen, die bei einer Kaltumformung nicht die erforderliche Ziehtiefe ermöglichen würden. Dadurch kann die Türverstärkung 1 aus dünneren und damit leichteren Stahlblechen hergestellt werden. Zudem weist die Türverstärkung 1 geringere Toleranzen auf und kann engere Radien und steilere Profilschrägen aufweisen, als eine Türverstärkung 1, die in einem Kaltumformverfahren hergestellt wurde.

## Patentansprüche

1. Fahrzeugseitentür mit einer Türverstärkung (1) zur Verbesserung des Seitenaufprallschutzes, die aus einem hochfesten Warmumformstahlblech tiefgezogen ist.

2. Fahrzeugseitentür nach Anspruch 1, **dadurch gekennzeichnet, dass** das Warmumformstahlblech aus einem Borstahl besteht.

3. Fahrzeugseitentür nach Anspruch 1 oder 2, **dadurch gekennzeichnet, dass** das Warmumformstahlblech eine Zugfestigkeit von mindestens 1500 MPa hat.

4. Fahrzeugseitentür nach einem der vorhergehenden Ansprüche, **dadurch gekennzeichnet, dass** sich die Türverstärkung (1) im wesentlichen über die gesamte Länge der Fahrzeugseitentür erstreckt.

5. Fahrzeugseitentür nach einem der vorhergehenden Ansprüche, **dadurch gekennzeichnet, dass** die Türverstärkung (1) so gestaltet ist, dass ein Abschnitt (6) der Türverstärkung (1) sich einteilig zumindest bis in einen Anbindungsbereich eines Türfeststellers an der Fahrzeugseitentür erstreckt und den Anbindungsbereich versteift.

6. Fahrzeugseitentür nach einem der vorhergehenden Ansprüche, **dadurch gekennzeichnet, dass** die Türverstärkung (1) so gestaltet ist, dass ein Abschnitt (3) der Türverstärkung (1) einteilig bis in den unteren Bereich der Fahrzeugseitentür erstreckt, über den sich die geschlossene Fahrzeugseitentür an einem Seitenschweller einer Fahrzeugkarosserie abstützt, sodass bei einem Seitenaufprall die Last besser in den Seitenschweller eingeleitet werden kann.
